(19) Europäisches Patentamt
European Patent Office
Office européen des brevets

(11) **EP 4 711 797 A1**

(12) **DEMANDE DE BREVET EUROPEEN**

(43) Date de publication:
**18.03.2026 Bulletin 2026/12**

(21) Numéro de dépôt: **25200744.8**

(22) Date de dépôt: **08.09.2025**

(51) Classification Internationale des Brevets (IPC):
**G01S 5/02** *(2010.01)*    **G01S 11/02** *(2010.01)*
**G01S 13/02** *(2006.01)*    **G01S 13/76** *(2006.01)*
**G01S 19/46** *(2010.01)*    **H04W 4/40** *(2018.01)*
H04W 4/80 *(2018.01)*    H04W 12/00 *(2021.01)*
G01S 3/46 *(2006.01)*

(52) Classification Coopérative des Brevets (CPC):
**G01S 5/0258; G01S 5/0284; G01S 13/0209;**
**G01S 13/765; G01S 19/48; H04W 4/023;**
**H04W 4/40;** G01S 3/46; G01S 11/02;
G01S 2205/01; H04W 4/80; H04W 12/009

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **16.09.2024 EP 24200612**
**18.11.2024 FR 2412573**

(71) Demandeur: **STMicroelectronics International N.V.**
**1228 Plan-les-Ouates, Geneva (CH)**

(72) Inventeurs:
• **AL-KADI, Ghiath**
**8045 GRAZ (AT)**
• **WUTTE, Rene**
**8151 SANKT BARTHOLOMA (AT)**

(74) Mandataire: **Cabinet Beaumont**
**4, Place Robert Schuman**
**B.P. 1529**
**38025 Grenoble Cedex 1 (FR)**

(54) **DISPOSITIF DE LOCALISATION ENTRE UN UTILISATEUR ET UN VEHICULE**

(57) La présente description concerne un dispositif de localisation (100, 100.1, 100.2) assurant la localisation entre un utilisateur et un véhicule autonome (1000), configuré pour être embarqué dans un équipement de l'utilisateur (2000) ou dans le véhicule autonome (1000), et comprenant un circuit électronique qui échange des signaux RF avec un autre dispositif de localisation (100, 100.1, 100.2) embarqué dans le véhicule autonome (1000) ou dans l'équipement de l'utilisateur (2000) respectivement, mesurant au moins une distance, par des moyens directs tels que le temps de vol ou des moyens indirects, entre l'équipement de l'utilisateur (2000) et le véhicule autonome (1000) à l'aide des échanges de signaux RF, et localisant le véhicule autonome (1000) ou l'équipement de l'utilisateur (2000) respectivement à l'aide de la distance mesurée.

Fig 7

EP 4 711 797 A1

**Description**

Domaine technique

La présente description concerne de façon générale le domaine des véhicules autonomes, par exemple les voitures autonomes.

Technique antérieure

Actuellement, lorsqu'une voiture autonome doit trouver un utilisateur, un conducteur ou un client, la localisation de l'utilisateur est basée sur les signaux GPS. Toutefois, la précision de cette localisation est faible, en particulier dans les cas où il n'y a pas de connexion GPS disponible ou seulement une faible connexion GPS, par exemple la prise en charge d'un utilisateur dans des zones souterraines ou couvertes comme les aéroports, les centres commerciaux et les canyons urbains.

En outre, une fois que la voiture autonome est proche de l'utilisateur, elle doit l'alerter, par exemple au moyen d'un affichage ou d'un son généré par le véhicule et/ou d'une notification sur le dispositif de l'utilisateur, afin de le guider jusqu'à la voiture. L'utilisateur doit se rendre dans une zone de prise en charge et trouver la bonne voiture. Cette solution est peu adaptée aux zones encombrées avec de multiples utilisateurs, et entraîne des problèmes de confidentialité et une mauvaise expérience pour l'utilisateur.

Des problèmes de sécurité peuvent également se poser. Par exemple, sans une précision suffisante, la voiture peut s'arrêter de l'autre côté de la rue et l'utilisateur est alors tenté de traverser la rue. Il en résulte une situation potentiellement dangereuse ou l'utilisateur n'est tout simplement pas du tout en mesure d'atteindre le véhicule.

Résumé de l'invention

Il existe un besoin de pallier tout ou partie des inconvénients des solutions connues.

Un mode de réalisation prévoit un dispositif de localisation fournissant une localisation entre un utilisateur et un véhicule autonome, configuré pour être embarqué dans l'équipement de l'utilisateur ou dans le véhicule autonome, et comprenant un circuit électronique qui échange des signaux RF avec un autre dispositif de localisation embarqué dans le véhicule autonome ou dans l'équipement de l'utilisateur respectivement, mesurant au moins une distance, par des moyens directs comme le temps de vol ou des moyens indirects, entre l'équipement de l'utilisateur et le véhicule autonome en utilisant les échanges de signaux RF, et localisant le véhicule autonome ou l'équipement de l'utilisateur respectivement à l'aide de la distance mesurée.

Selon un mode de réalisation particulier, le circuit électronique comprend un émetteur-récepteur UWB et le circuit électronique mesure la distance entre l'équipement de l'utilisateur et le véhicule autonome en utilisant au moins des échanges de signaux UWB.

Selon un mode de réalisation particulier, le circuit électronique comprend au moins deux antennes Rx pour mesurer un angle d'arrivée (A-o-A).

Selon un mode de réalisation particulier, l'émetteur-récepteur UWB est configuré pour émettre et recevoir des signaux UWB conformément à la norme IEEE 802.15.4ab.

Selon un mode de réalisation particulier, le circuit électronique comprend au moins un parmi un émetteur-récepteur Bluetooth et un émetteur-récepteur Wifi (c'est-à-dire un émetteur-récepteur Bluetooth et/ou un émetteur-récepteur Wifi), et le circuit électronique mesure la distance entre l'équipement de l'utilisateur et le véhicule autonome en utilisant au moins un parmi des échanges de signaux Bluetooth et des échanges de signaux Wifi (c'est-à-dire en utilisant des échanges de signaux Bluetooth et/ou des échanges de signaux Wifi).

Selon un mode de réalisation particulier, le dispositif de localisation comprend en outre un récepteur GPS, et le circuit électronique localise le véhicule autonome ou l'équipement de l'utilisateur à l'aide de la distance mesurée et d'une localisation GPS.

Selon un mode de réalisation particulier, le circuit électronique comprend en outre un émetteur-récepteur à bande étroite, et le circuit électronique mesure la distance entre le véhicule autonome et l'équipement de l'utilisateur en utilisant des échanges de signaux à bande étroite.

Selon un mode de réalisation particulier, le dispositif de localisation comprend en outre au moins un capteur inertiel, et le circuit électronique est configuré pour calculer des informations supplémentaires telles qu'un angle entre une ligne, qui relie la position de l'utilisateur et la position du véhicule autonome, et une direction de l'utilisateur lorsque le dispositif de localisation est embarqué dans l'équipement de l'utilisateur, ou entre ladite ligne et une direction du véhicule autonome lorsque le dispositif de localisation est embarqué dans le véhicule autonome, en utilisant au moins une mesure du capteur inertiel, et localise le véhicule autonome ou l'équipement de l'utilisateur, respectivement, en utilisant également l'angle calculé.

Selon un mode de réalisation particulier, le dispositif de localisation comprend en outre une unité de mesure inertielle, IMU, comportant au moins un capteur inertiel.

Selon un mode de réalisation particulier, le circuit électronique reçoit une clef de sécurité avant les échanges de signaux RF et échange ensuite des signaux RF en utilisant la clef de sécurité.

Un autre mode de réalisation décrit un véhicule autonome comprenant un dispositif de localisation selon un mode de réalisation particulier.

Selon un mode de réalisation particulier, le véhicule autonome correspond à une voiture ou à un drone ou similaire.

Un autre mode de réalisation décrit un équipement d'utilisateur, ou un dispositif de l'utilisateur, comprenant un dispositif de localisation selon un mode de réalisation particulier.

Selon un mode de réalisation particulier, l'équipement de l'utilisateur correspond à un smartphone, une montre ou une tablette.

Un autre mode de réalisation décrit un système de gestion des échanges entre un utilisateur comprenant un équipement et un véhicule autonome comportant chacun un dispositif de localisation selon un mode de réalisation particulier, qui envoie la clef de sécurité au dispositif de localisation de l'équipement de l'utilisateur et au dispositif de localisation du véhicule autonome.

Selon un mode de réalisation particulier, le système met en œuvre les étapes suivantes :

- la création d'une session entre l'équipement de l'utilisateur et le véhicule autonome ;

- la génération de la clef de sécurité ;

- l'envoi de la clef de sécurité à l'équipement de l'utilisateur et au véhicule autonome ;

- l'envoi d'une instruction d'invalidation de la clef de sécurité au véhicule autonome à la fin de la session entre l'équipement de l'utilisateur et le véhicule autonome.

Selon un mode de réalisation particulier, le système envoie également la clef de sécurité à un autre équipement de l'utilisateur.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un premier exemple d'utilisation de dispositifs de localisation selon un mode de réalisation particulier dans l'équipement de l'utilisateur et dans un véhicule autonome, par rapport à un véhicule autonome qui localise un utilisateur en utilisant uniquement des signaux GPS ;

la figure 2 représente un deuxième exemple d'utilisation de dispositifs de localisation selon un mode de réalisation particulier dans un équipement de l'utilisateur et dans un véhicule autonome ;

la figure 3 représente un processus mis en œuvre dans un système pour gérer les échanges entre un équipement de l'utilisateur et un véhicule autonome comportant chacun un dispositif de localisation selon un mode de réalisation particulier ;

la figure 4 représente les différences entre les normes de l'IEEE 802.15.4z (trames de données et de télémétrie sur UWB) et 802.15.4ab (trames de données sur bande étroite et télémétrie sur UWB) ;

la figure 5 représente une portée MMS assistée à bande étroite qui peut être utilisée pendant les échanges entre un équipement de l'utilisateur et un véhicule autonome comportant chacun un dispositif de localisation selon un mode de réalisation particulier ;

la figure 6 représente un véhicule autonome et un équipement de l'utilisateur qui échangent des signaux RF entre eux, ainsi qu'un système de gestion de ces échanges ;

la figure 7 représente un exemple de flux de haut niveau commençant par l'inscription à un service jusqu'à l'arrivée de la voiture au niveau du client ;

la figure 8 représente un exemple d'échanges de signaux effectués pendant un procédé DS-TWR à 3 messages mis en œuvre pour obtenir une distance entre un véhicule autonome et un équipement de l'utilisateur ;

la figure 9 représente des exemples d'échanges de signaux mis en œuvre selon un procédé DS-TWR à 3 messages entre un initiateur et plusieurs répondeurs.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Un mode de réalisation propose d'utiliser des mesures de distance RF dans un véhicule équipé de la technologie RF, par exemple UWB (de l'anglais « Ultra Wide Band », bande ultra-large) et plus particulièrement des signaux RF conformes à la norme IEEE 802.15.4ab, pour localiser la position des utilisateurs, des clients ou des conducteurs (ci-après dénommés "utilisateurs" ou "l'utilisateur"), en déterminant la distance avec les dispositifs mobiles des utilisateurs. Par conséquent, le véhicule peut localiser avec une très grande précision le lieu de prise en charge de l'utilisateur et s'arrêter à proximité de l'utilisateur.

De plus, l'utilisateur peut voir très précisément la position du véhicule dans le cas où le véhicule n'est pas autorisé à s'approcher de l'utilisateur ou n'est pas en mesure de le faire, et le système guidera l'utilisateur jusqu'à l'emplacement de stationnement du véhicule.

Un mode de réalisation propose de relier un dispositif de l'utilisateur, par exemple un smartphone, à un véhicule pour échanger au moins une clef sécurisée fournie par le nuage informatique (ou similaire) à utiliser pour la télémétrie sécurisée. De plus, l'IMU (de l'anglais Inertial Measurement Unit, unité de mesure inertielle) de l'équipement de l'utilisateur ou du véhicule autonome peut également être échangé afin d'améliorer le guidage. La télémétrie finale peut être déclenchée sur la base de la position GPS échangée.

Selon certains modes de réalisation, il y a un échange de données de position par l'intermédiaire de mesures de distance entre le véhicule autonome et l'utilisateur sur la dernière distance (possiblement, de pratiquement zéro jusqu'à 20 à 100 m). Un ou plusieurs échanges de signaux RF peuvent être utilisés pour mesurer la distance entre l'équipement de l'utilisateur 2000 et le véhicule autonome 1000, par exemple en mesurant le temps de vol des signaux entre l'équipement de l'utilisateur 2000 et le véhicule autonome 1000.

Par exemple, la technique utilisée pour mesurer la distance entre l'équipement de l'utilisateur 2000 et le véhicule autonome 1000 peut correspondre au procédé DS-TWR (de l'anglais "Double-sided two-way ranging"), ou DS-TWR à 3 messages. Dans ce cas, l'équipement de l'utilisateur 2000 envoie une configuration au véhicule autonome 1000, puis un signal "ping" aux points d'ancrage du véhicule 1000, c'est-à-dire aux éléments de communication ayant, par exemple, une position prédéfinie dans le véhicule 1000. Après que tous les points d'ancrage, ou au moins l'un d'entre eux, aient répondu à l'équipement 2000 par un signal "pong", l'équipement 2000 envoie un signal "ping" supplémentaire, puis les données finales. La distance entre l'équipement de l'utilisateur 2000 et le véhicule autonome 1000 peut être mesurée sur la base des durées d'exécution calculées de ces échanges.

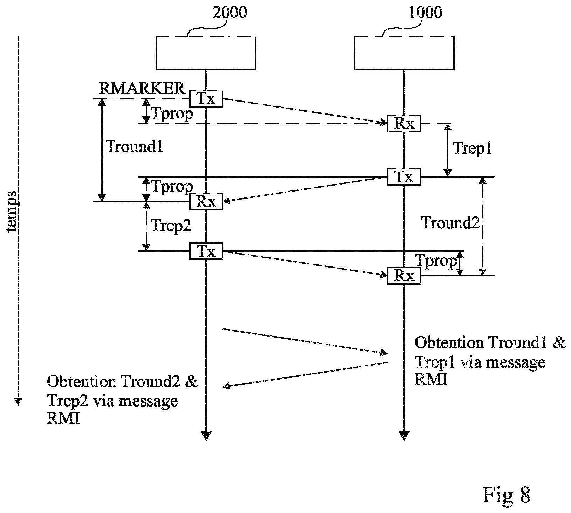

La figure 8 représente schématiquement un exemple de DS-TWR à 3 messages mis en œuvre entre l'équipement de l'utilisateur 2000 et le véhicule autonome 1000. Dans cette configuration, le temps de propagation Tprop, c'est-à-dire le temps de vol (ToF) entre l'équipement 2000 et le véhicule 1000, peut être égal à :

$$\text{Tprop} = \frac{\text{Tround1}*\text{Tround2} - \text{Trep1}*\text{Trep2}}{\text{Tround1}+\text{Tround2}+\text{Trep1}+\text{Trep2}}$$

avec Tround1 : temps entre l'émission d'un premier signal par l'équipement 2000 vers le véhicule 1000 et la réception par l'équipement 2000 d'un deuxième signal émis par le véhicule 1000 ;

Tround2 : temps entre l'émission du deuxième signal par le véhicule 1000 vers l'équipement 2000 et la réception par le véhicule 1000 d'un troisième signal émis par l'équipement 2000 ;

Trep1 : temps entre la réception du deuxième signal par le véhicule 1000 et l'émission du troisième signal par le véhicule 1000 ;

Trep2 : temps entre la réception du deuxième signal par l'équipement 2000 et l'émission du troisième signal par l'équipement 2000.

La distance entre l'équipement de l'utilisateur 2000 et le véhicule autonome 1000 peut être calculée de la façon suivante :

$$\text{Distance = vitesse de la lumière * Tprop.}$$

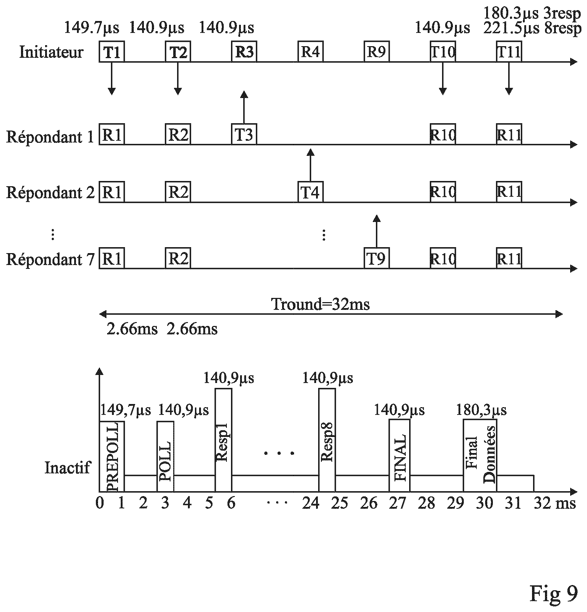

La figure 9 représente des exemples d'échanges de signaux mis en œuvre selon un procédé DS-TWR à 3 messages entre un initiateur, par exemple l'équipement de l'utilisateur 2000, et plusieurs répondeurs, par exemple les points d'ancrage du véhicule autonome 1000. Les valeurs des durées indiquées sur cette figure sont des exemples et peuvent être différentes.

Les calculs effectués comportent principalement la distance mesurée entre le véhicule et l'utilisateur, mais aussi un angle d'arrivée (a-o-a), des données IMU telles que la direction suivie ou encore une position sur une carte pour l'utilisateur, alors que le véhicule utilise ces données pour des raisons similaires.

Selon une variante, d'autres technologies RF pourraient être utilisées pour mesurer la distance, avec une précision moindre mais suffisante. Le sondage des canaux BLE (de l'anglais Bluetooth Low Energy, Bluetooth à basse consommation) ou le WIFI direct pourraient être utilisés à titre d'exemple.

Il est donc décrit une localisation de l'utilisateur à l'aide de signaux RF, par exemple UWB, par des véhicules de transport autonomes, par exemple des voitures autonomes, ainsi qu'une localisation du véhicule de transport autonome à l'aide de signaux RF par un utilisateur.

La solution décrite précédemment propose d'utiliser un signal RF, par exemple des signaux UWB (et en particulier la norme IEEE 802.15.4ab) pour surmonter les limitations actuelles rencontrées par les véhicules autonomes pour trouver l'utilisateur.

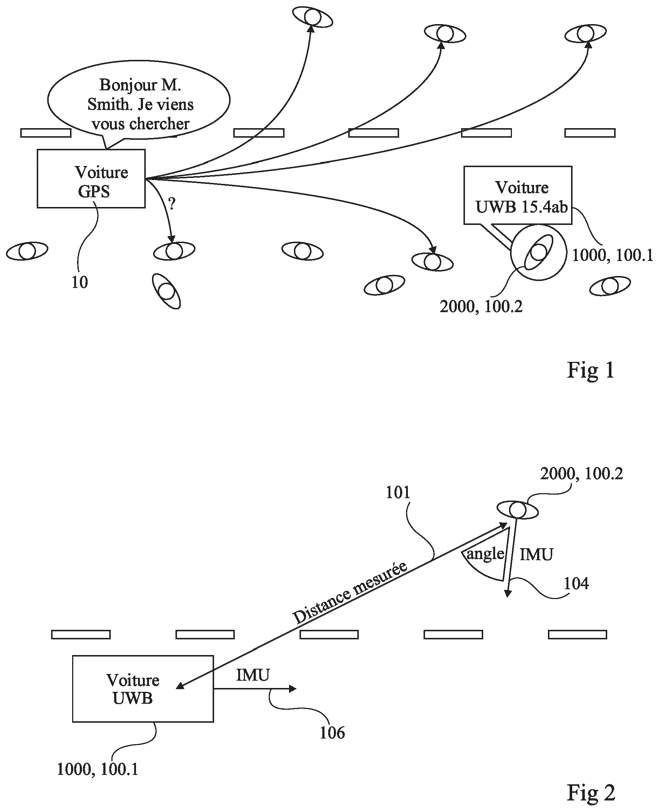

La figure 1 représente un premier exemple d'utilisation de dispositifs de localisation 100.1, 100.2 selon un mode de réalisation particulier dans l'équipement de l'utilisateur 2000 et dans un véhicule autonome 1000, par rapport à un véhicule autonome 10 qui localise un utilisateur en utilisant uniquement des signaux GPS.

Dans la figure 1 est représenté un véhicule autonome 10 (identifiée "voiture GPS") qui localise un utilisateur en utilisant uniquement des signaux GPS. Étant donné que ce véhicule autonome 10 utilise uniquement des signaux GPS, il n'est pas en mesure de localiser avec précision l'utilisateur prévu. Une annonce (par exemple visuelle ou sonore) du nom, de l'identifiant ID de la commande ou d'un élément similaire de l'utilisateur est donc effectuée par le véhicule autonome 10. Dans la figure 1, plusieurs flèches entre le véhicule autonome 10 et plusieurs utilisateurs potentiels sont dessinées, illustrant le fait que le véhicule autonome 10 ne peut pas localiser avec précision l'utilisateur destiné à l'utiliser, car toutes les personnes désignées par les flèches sont situées dans une zone dans laquelle est localisé l'utilisateur destiné à utiliser le véhicule. Dans la figure 1, une annonce sonore intitulée "Bonjour M. Smith. Je viens vous chercher" est représentée, ce qui indique qu'une annonce est actuellement faite d'une façon ou une autre.

Dans la figure 1, un autre véhicule autonome 1000 (identifié "voiture UWB 15.4ab") comprenant un dispositif de localisation 100.1 échangeant des signaux RF, par exemple un signal UWB, avec un autre dispositif de localisation 100.2 embarqué dans l'équipement de l'utilisateur 2000, par exemple un smartphone, est capable de localiser avec précision l'utilisateur destiné à l'utiliser.

La figure 2 représente un deuxième exemple d'utilisation des dispositifs de localisation 100.1, 100.2 selon un mode de réalisation particulier dans un équipement de l'utilisateur 2000 et dans un véhicule autonome 1000. Par rapport au premier exemple, les dispositifs de localisation 100.1, 100.2 embarqués dans l'équipement de l'utilisateur 2000 et dans le véhicule autonome 1000 comprennent chacun une unité de mesure inertielle, IMU, comportant au moins un capteur inertiel, non représenté sur la figure 2. Les circuits électroniques des dispositifs de localisation 100.1, 100.2 calculent un angle (identifié "angle" sur la Figure 2) entre une ligne 101, qui relie la position de l'utilisateur et la position du véhicule autonome 1000, et une direction de l'utilisateur 104 pour le dispositif de localisation 100.2, qui est embarqué dans l'équipement de l'utilisateur 2000, ou entre ladite ligne 101 et une direction du véhicule autonome 106 pour le dispositif de localisation 100.1, qui est embarqué dans le véhicule autonome 1000, à l'aide d'au moins une mesure par un capteur inertiel. Chacun de ces dispositifs de localisation 100.2, 100.1 localise le véhicule autonome 1000 ou l'équipement de l'utilisateur 2000 respectivement à l'aide de l'angle calculé et des échanges de signaux RF.

Par exemple, en connaissant la direction dans laquelle le véhicule 1000 roule et à laquelle le client fait face (données provenant de l'IMU) et l'information selon laquelle la distance diminue (données provenant de la mesure de la distance, par exemple au moyen de signaux 802.15.4ab, BLE ou wifi), même sans connaître l'angle et la direction (qui pourraient également être mesurés dans le cas où l'équipement de l'utilisateur 2000 est en contact avec trois points d'ancrage du véhicule 1000), il est possible de savoir par quel côté le véhicule 1000 s'approche du client, même si le GPS n'est pas disponible.

Par exemple, dans la configuration illustrée dans la figure 2, si le véhicule 1000 roule vers l'ouest et que le client est tourné vers le nord, le véhicule 1000 doit s'approcher du côté droit. Il en va de même du point de vue de la voiture.

Ainsi, l'utilisation d'informations supplémentaires échangées, telles que l'IMU du véhicule et celle du dispositif de l'utilisateur et l'angle d'arrivée, permet d'améliorer le guidage. Par exemple, en connaissant la direction et la vitesse du véhicule, la direction à laquelle l'utilisateur fait face et l'information selon laquelle la distance entre le dispositif de l'utilisateur et le véhicule diminue, même sans l'angle, il est possible de savoir de quel côté le véhicule s'approche de l'utilisateur, même si le GPS n'est pas disponible. À titre d'exemple, l'angle d'arrivée peut être mesuré à l'aide d'au moins deux antennes Rx de chacun des dispositifs de localisation 100.1, 100.2. Cette mesure peut être effectuée par triangulation, sur la base des données obtenues. Par exemple, connaissant la distance entre deux points d'ancrage du véhicule 1000 et la distance entre chacun des points d'ancrage et l'équipement de l'utilisateur 2000, il est possible de connaître la position de l'équipement de l'utilisateur 2000. Avec un troisième point d'ancrage du véhicule 1000, le retournement de l'équipement de l'utilisateur 2000 peut être exclu et il est possible de savoir également de quel côté de la voiture se trouve l'utilisateur.

Dans l'exemple ci-dessus, si le véhicule roule vers l'ouest et que l'utilisateur est orienté vers le nord, le véhicule peut s'approcher de l'utilisateur par la droite. Il en va de même du point de vue du véhicule.

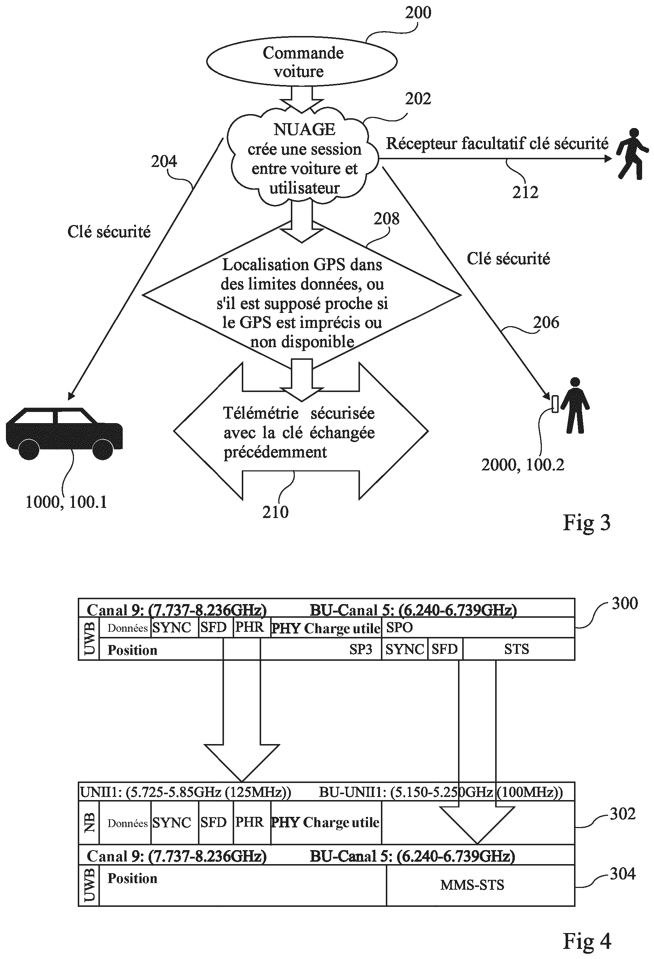

La figure 3 représente un processus mis en œuvre dans un système de gestion des échanges entre un utilisateur comprenant un équipement 2000 et un véhicule autonome 1000 comportant chacun un dispositif de localisation 100.2, 100.1 tel que précédemment décrit. Le processus peut comprendre au moins l'une des étapes suivantes :

1) Lorsque l'utilisateur commande un véhicule donné (étape 200 de la figure 3), le nuage informatique (c'est-à-dire le système de gestion) crée une session entre le dispositif de l'utilisateur 2000 et le véhicule 1000 attribué à cet utilisateur (étape 202).

2) La session génère une clef de sécurité, ou clef de cryptage, qui est envoyée au véhicule 1000 (envoi désigné par le numéro "204") et au dispositif de l'utilisateur 2000 (envoi désigné par le numéro "206") et qui est ensuite utilisée pour la télémétrie et l'échange éventuel de données sécurisés entre le véhicule 1000 et le dispositif de l'utilisateur 2000.

Dans le processus représenté en figure 3, avant d'utiliser les échanges de signaux RF, le GPS peut être utilisé comme déclencheur pour initier la télémétrie et pour déterminer une première localisation grossière entre le véhicule 1000 et le dispositif de l'utilisateur 2000 (étape 208). Les positions GPS peuvent être considérées comme se trouvant dans des limites données, ou comme étant proches si le GPS est imprécis ou non disponible.

3) Lorsque le véhicule 1000 se trouve à proximité de l'utilisateur, une session UWB, ou plus généralement des échanges de signaux RF, commencent entre le dispositif de l'utilisateur 2000 et le véhicule 1000 sur la base de la clef échangée (étape 210).

4) Lorsque l'utilisateur est suffisamment proche du véhicule 1000, l'utilisateur peut entrer dans le véhicule 1000 et l'utiliser (en le conduisant activement ou en se faisant conduire) tandis que la voiture, ou le véhicule, 1000 peut également effectuer une détection intérieure/extérieure sécurisée du dispositif de l'utilisateur 2000 en fonction de celui-ci.

4a) Dans le cas où une autre personne est transportée par le véhicule 1000, tel qu'un robot-taxi (par exemple un enfant), le dispositif de commande peut être utilisé pour vérifier et démarrer le transport. En option, une deuxième clef peut être générée pour le dispositif de la personne transportée. Cette situation est représentée dans la figure 3, dans laquelle une clef de sécurité de récepteur facultative est envoyée à un dispositif de commande (envoi étiqueté "212").

4b) Dans le cas où un objet est transporté, le dispositif de commande peut être utilisé pour vérifier et démarrer le transport.

5) Lorsque l'utilisateur arrive à destination (robot-taxi) ou décide d'arrêter la session de conduite (par exemple, covoiturage) en sortant du véhicule, la session est terminée et la clef de sécurité est invalidée.

5a) Lorsque le passager arrive à destination, le dispositif de l'utilisateur qui a commandé la course est informé de l'arrivée (par de nombreux moyens, qui peuvent par exemple inclure la vérification que le passager est sorti au bon endroit) et la session et la clef de sécurité sont résiliées (optionnellement sur confirmation par le dispositif) éventuellement si le dispositif du passager reçoit également une clef, les deux clefs sont résiliées.

5b) Lorsque le véhicule arrive à destination, la communication sécurisée avec le dispositif de l'utilisateur de l'utilisateur recepteur est déclenchée pour permettre le déchargement du colis. Une fois le colis retiré et la livraison effectuée, la session et la clef sont résiliées sur les deux dispositifs.

Le procédé ci-dessus peut être mis en œuvre dans un système de gestion des échanges entre un utilisateur comprenant un équipement et un véhicule autonome comportant chacun un dispositif de localisation tel que décrit précédemment, qui envoie une clef de sécurité (publique ou privée) au dispositif de localisation de l'équipement de l'utilisateur et au dispositif de localisation du véhicule autonome.

Le système peut mettre en œuvre les étapes suivantes :

- la création d'une session entre l'équipement de l'utilisateur et le véhicule autonome ;

- la génération de la clef de sécurité ;

- l'envoi de la clef de sécurité à l'équipement de l'utilisateur et au véhicule autonome ;

- l'envoi d'une instruction d'invalidation de la clef de sécurité au véhicule autonome et à l'équipement de l'utilisateur à la fin de la session entre l'équipement de l'utilisateur et le véhicule autonome.

La figure 4 représente des signaux RF et à bande étroite échangés entre l'équipement de l'utilisateur 2000 et un véhicule autonome 1000 comportant chacun un dispositif de localisation.

L'exemple représenté dans la partie supérieure de la figure 4 correspond à un signal UWB conforme à la norme IEEE 802.15.4z, qui peut être utilisé pour les échanges de signaux RF entre l'équipement de l'utilisateur 2000 et le véhicule autonome 1000 comportant chacun un dispositif de localisation 100.2, 100.1. La partie supérieure de la figure 4 représente un exemple de trame UWB 300 échangée entre l'équipement de l'utilisateur 2000 et le véhicule autonome 1000, par exemple sur un canal 9 entre 7,737 GHz et 8,236 GHz ou un canal 5 entre 6,240 GHZ et 6,739 GHz. D'autres canaux peuvent être utilisés pour les échanges de signaux RF.

Pour exploiter pleinement le potentiel des dispositifs de localisation en termes de distance et de précision, il est possible d'utiliser, comme le représente la partie inférieure de la figure 4, un signal UWB conforme à la norme IEEE 802.15.4ab, car le bilan de liaison est augmenté de 15 à 17 dB, ce qui augmente la distance de télémétrie sécurisée d'un facteur de 4 à 6 fois la distance de télémétrie sécurisée par rapport à la distance obtenue avec un signal UWB conforme à la norme IEEE 802.15.4z. Ce plein potentiel peut être obtenu en utilisant la télémétrie assistée MMS (Multiple-milliseconde) et à bande étroite. La partie inférieure de la figure 4 représente un exemple de trames UWB et à bande étroite 302, 304 échangées entre l'équipement de l'utilisateur 2000 et le véhicule autonome 1000, par exemple sur un canal 9 entre 7,737 GHz et 8,236 GHz ou un canal 5 entre 6,240 GHZ et 6,739 GHz pour les trames UWB, et une bande UNII-3 entre 5,725 GHz et 5,85 GHz ou une bande UNII-1 entre 5,15 GHz et 5,25 GHz. D'autres canaux peuvent être utilisés pour les échanges de signaux RF.

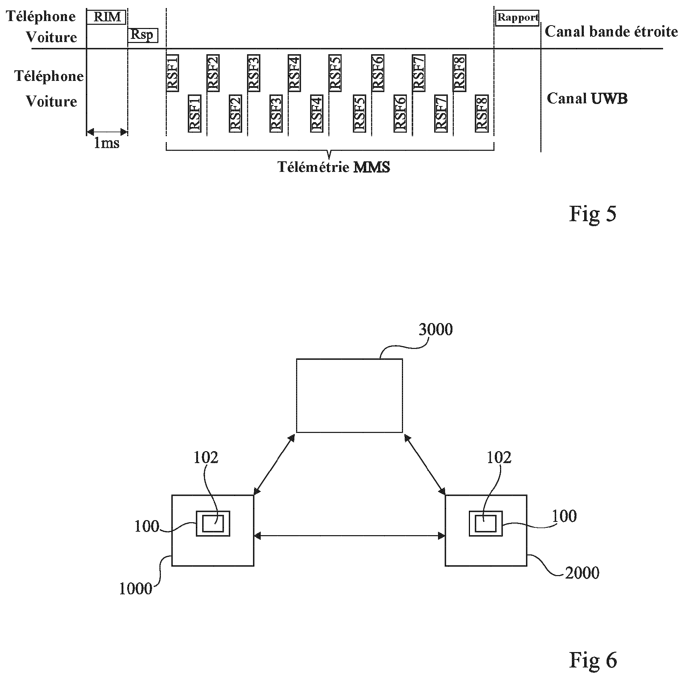

Dans l'exemple de la figure 5, la communication de données est échangée sur un canal à bande étroite, ce qui entraîne une augmentation d'environ 17 dB par rapport à SP0. Dans ce cas, les trames de données SP0 sont remplacées par 250 canaux disponibles, une horloge synchronisée pour la bande étroite NB (« NarrowBand » en anglais) avec la télémétrie UWB MMS. Par ailleurs, le transfert bidirectionnel de données permet des optimisations supplémentaires pendant la session de télémétrie, par exemple en modifiant le mode MMS ou la fréquence de mesure.

Dans l'exemple de la figure 5, la mesure de la distance avec la télémétrie MMS entraîne une augmentation d'environ 15 dB par rapport à SP3 (17 à 18 dB par rapport à SP0). Les trames SP3 sont donc remplacées.

Dans la figure 5, le véhicule autonome 1000 est identifié "Voiture" et l'équipement de l'utilisateur 2000 est identifié "Téléphone".

La figure 6 représente un véhicule autonome 1000, par exemple une voiture autonome, et un équipement de l'utilisateur 2000, par exemple un smartphone, qui échangent des signaux RF entre eux, et un système 3000 pour gérer ces échanges.

Le véhicule 1000 et l'équipement 2000 comprennent chacun un dispositif de localisation 100 entre un utilisateur et un véhicule autonome, configuré pour être embarqué dans l'équipement de l'utilisateur 2000 ou dans le véhicule autonome 1000, et comprenant un circuit électronique 102 échangeant des signaux RF avec un autre dispositif de localisation 100 embarqué dans le véhicule autonome 1000 ou dans l'équipement de l'utilisateur 2000 respectivement, mesurant une distance entre l'équipement de l'utilisateur 2000 et le véhicule autonome 1000 à l'aide des échanges de signaux RF, et localisant le véhicule autonome 1000 ou l'équipement de l'utilisateur 2000 respectivement à l'aide de la distance mesurée.

Par exemple, le dispositif de localisation 100.2 de l'équipement de l'utilisateur 2000 peut correspondre à un ensemble de puces RF capable de faire de la télémétrie. Cet ensemble de puces RF peut être configuré pour effectuer des échanges de signaux UWB avec ou sans la spécification 802.15.4ab, BLE ou Wifi. Par exemple, le dispositif de localisation 100.1 du véhicule autonome 1000 peut correspondre à un ensemble de puces RF situé à l'intérieur d'un point d'ancrage du véhicule et adapté à l'utilisation d'un téléphone.

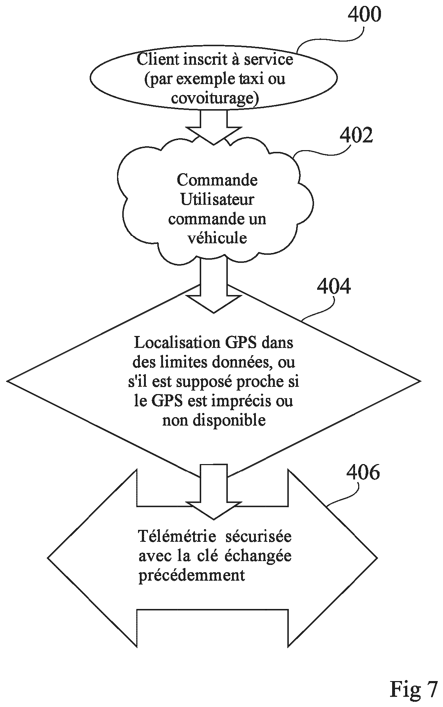

La figure 7 représente un exemple d'établissement d'une télémétrie sécurisée entre l'équipement de l'utilisateur 2000 et le véhicule autonome 1000.

Tout d'abord, un utilisateur, ou client, s'inscrit auprès d'un service, formant ainsi une preuve de personne (étape 400). Ce service peut correspondre à un taxi ou à un covoiturage.

Ensuite, l'utilisateur commande le véhicule 1000 (étape 402). Une clef sécurisée, ou clef de sécurité, est envoyée au véhicule 1000 et au dispositif de l'utilisateur 2000. Cette clef sécurisée pourrait être similaire à une clef d'ami ou à une clef numérique ou à une clef de point final sur le téléphone et à une clef de véhicule sur la voiture.

Dans le processus de la figure 7, avant d'utiliser les échanges de signaux RF, le GPS peut être utilisé pour déterminer une première localisation grossière entre le véhicule 1000 et le dispositif de l'utilisateur 2000 (étape 404). Les positions GPS peuvent être considérées comme étant à l'intérieur de limites données, ou comme étant proches si le GPS est imprécis ou non disponible.

Ensuite, lorsque le véhicule 1000 et le dispositif de l'utilisateur 2000 sont à proximité, temporaire ou éphémère, les clefs sont générées si elles sont proches de l'endroit où les clefs publiques sont échangées entre la voiture, c'est-à-dire le véhicule 1000, et le dispositif 2000.

Avec ces paires de clefs et après le procédé Diffie-Hellmann par exemple, une clef est générée en utilisant des procédés de multiplication avec les deux clefs.

A partir de cela, les clefs de session et URSK (de l'anglais UWB ranging session key, clef de session de télémétrie UWB) sont générées.

Des clefs supplémentaires peuvent être obtenues pour la télémétrie sécurisée (STS, MMS RFI, etc.).

La télémétrie sécurisée avec la clef précédemment échangée est alors effectuée (étape 406).

Il existe d'autres possibilités pour établir une télémétrie sécurisée entre le dispositif de l'utilisateur et la voiture.

Dans tous les exemples, lorsqu'un utilisateur commande un véhicule autonome donné, par exemple une voiture autonome, le nuage informatique peut créer une session entre le dispositif de l'utilisateur et le véhicule attribué à cet utilisateur. La session peut générer une clef de sécurité qui est ensuite utilisée pour une télémétrie sécurisée entre le véhicule et l'utilisateur. Lorsque le véhicule se trouve à proximité de l'utilisateur, une session UWB, ou une session de signaux RF, démarre entre l'appareil de l'utilisateur et le véhicule.

Un mode de réalisation particulier peut améliorer l'expérience de l'utilisateur. En particulier, s'il est déployé et utilisé par un grand nombre de personnes, le ramassage est beaucoup plus fluide, offre une meilleure expérience à l'utilisateur et est plus sûr (le véhicule s'approche du côté droit, les gens n'ont pas besoin de traverser les rues).

Il est possible d'éviter qu'un utilisateur ne soit pris par erreur, en particulier dans les situations où il y a beaucoup de monde.

Selon un mode de réalisation particulier, une capacité de la norme IEEE 802.15.4ab peut être utilisée pour effectuer une télémétrie précise (~10 cm) sur de plus grandes distances, voire de 100 m jusqu'au dernier mètre.

Un mode de réalisation particulier propose l'utilisation de signaux RF, par exemple la technologie UWB 15.4ab (c'est-à-dire la norme IEEE 802.15.4ab), pour permettre aux véhicules et dispositifs équipés de cette technologie d'échanger la distance, l'angle et à d'autres des données relatives à la position/orientation afin de permettre aux véhicules autonomes de prendre en charge les utilisateurs avec précision et, dans le cas où le véhicule ne peut pas approcher l'utilisateur, de guider l'utilisateur jusqu'au véhicule.

Par exemple, les signaux UWB 15.4ab fourniront des données de "position" (distance et angle) précises et à longue portée et ne seront pas affectés par la couverture de la zone comme le GPS. Il n'est pas nécessaire d'appeler l'utilisateur car le véhicule peut identifier sa position avec précision.

La solution décrite précédemment peut s'appliquer aux domaines de la location de voitures, des robots-taxis, des drones de livraison ou du covoiturage. La solution décrite précédemment peut permettre de localiser un utilisateur de façon discrète, sûre et précise. La solution décrite précédemment s'applique à tout type de véhicule autonome, par exemple pour le transport d'humains, d'animaux, d'objets, etc.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

**Revendications**

1. Dispositif de localisation (100, 100.1, 100.2) assurant la localisation entre un utilisateur et un véhicule autonome (1000), configuré pour être embarqué dans un équipement de l'utilisateur (2000) ou dans le véhicule autonome (1000), et comprenant un circuit électronique (102) qui échange des signaux RF avec un autre dispositif de localisation (100, 100.1, 100.2) embarqué dans le véhicule autonome (1000) ou dans l'équipement de l'utilisateur (2000) respectivement, mesurant au moins une distance, par des moyens directs tels que le temps de vol ou des moyens indirects, entre l'équipement de l'utilisateur (2000) et le véhicule autonome (1000) à l'aide d'échanges de signaux RF, et localisant le véhicule autonome (1000) ou l'équipement de l'utilisateur (2000) respectivement à l'aide de la distance mesurée.

2. Dispositif de localisation (100, 100.1, 100.2) selon la revendication 1, dans lequel le circuit électronique (102) comprend un émetteur-récepteur UWB et dans lequel le circuit électronique (102) mesure la distance entre l'équipement de l'utilisateur (2000) et le véhicule autonome (1000) en utilisant au moins des échanges de signaux UWB.

3. Dispositif de localisation (100, 100.1, 100.2) selon la revendication 2, dans lequel le circuit électronique (102) comprend au moins deux antennes Rx pour mesurer un angle d'arrivée.

4. Dispositif de localisation (100, 100.1, 100.2) selon la revendication 3, dans lequel l'émetteur-récepteur UWB est configuré pour émettre et recevoir des signaux UWB conformément à la norme IEEE 802.15.4ab.

5. Dispositif de localisation (100, 100.1, 100.2) selon l'une quelconque des revendications précédentes, dans lequel le circuit électronique (102) comprend au moins un parmi un émetteur-récepteur Bluetooth et un émetteur-récepteur Wifi, et dans lequel le circuit électronique (102) mesure la distance entre l'équipement de l'utilisateur (2000) et le véhicule autonome (1000) en utilisant au moins un parmi des échanges de signaux Bluetooth et des échanges de signaux Wifi.

6. Dispositif de localisation (100, 100.1, 100.2) selon l'une quelconque des revendications précédentes, comprenant en outre un récepteur GPS, et dans lequel le circuit électronique (102) localise le véhicule autonome (1000) ou l'équipement de l'utilisateur (2000) à l'aide de la distance mesurée et d'une localisation GPS.

7. Dispositif de localisation (100, 100.1, 100.2) selon l'une quelconque des revendications précédentes, dans lequel le circuit électronique (102) comprend en outre un émetteur-récepteur à bande étroite, et dans lequel le circuit électronique (102) mesure la distance entre le véhicule autonome (1000) et l'équipement de l'utilisateur (2000) à l'aide d'échanges de signaux à bande étroite.

8. Dispositif de localisation (100, 100.1, 100.2) selon l'une quelconque des revendications précédentes, comprenant en outre au moins un capteur inertiel, et dans lequel le circuit électronique (102) est configuré pour calculer des informations supplémentaires comme un angle entre une ligne (101), qui relie la position de l'utilisateur et la position du véhicule autonome (1000), et une direction de l'utilisateur lorsque le dispositif de localisation (100, 100.2) est embarqué dans l'équipement de l'utilisateur (2000), ou entre ladite ligne (101) et une direction du véhicule autonome lorsque le dispositif de localisation (100, 100.1) est embarqué dans le véhicule autonome (1000), à l'aide d'au moins une mesure effectuée par un capteur inertiel, et localise le véhicule autonome (1000) ou l'équipement de l'utilisateur (2000) respectivement, également à l'aide de l'angle calculé.

9. Dispositif de localisation (100, 100.1, 100.2) selon la revendication 8, comprenant en outre une unité de mesure inertielle, IMU, comportant ledit au moins un capteur inertiel.

10. Dispositif de localisation (100, 100.1, 100.2) selon l'une quelconque des revendications précédentes, dans lequel le circuit électronique (102) reçoit une clef de sécurité avant les échanges de signaux RF et échange ensuite des signaux RF en utilisant la clef de sécurité.

11. Véhicule autonome (1000) comprenant un dispositif de localisation (100, 100.1) selon l'une quelconque des revendications précédentes, correspondant par exemple à une voiture ou à un drone.

12. Équipement utilisateur (2000) comprenant un dispositif de localisation (100, 100.2) selon l'une quelconque des revendications 1 à 10, et correspondant à un smartphone, une montre ou une tablette.

13. Système (3000) de gestion des échanges entre un utilisateur comprenant un équipement (2000) et un véhicule autonome (1000) comportant chacun un dispositif de localisation (100, 100.1, 100.2) selon la revendication 10, qui envoie la clef de sécurité au dispositif de localisation de l'équipement de l'utilisateur et au dispositif de localisation du véhicule autonome.

**14.** Système (3000) selon la revendication 13, mettant en œuvre les étapes suivantes :

- la création d'une session entre l'équipement de l'utilisateur (2000) et le véhicule autonome (1000) ;
- la génération de la clef de sécurité ;
- l'envoi de la clef de sécurité à l'équipement de l'utilisateur (2000) et au véhicule autonome (1000) ;
- l'envoi d'une instruction d'invalidation de la clef de sécurité au véhicule autonome (1000) à la fin de la session entre l'équipement de l'utilisateur (2000) et le véhicule autonome (1000).

**15.** Système (3000) selon l'une quelconque des revendications 13 ou 14, qui envoie également la clef de sécurité à un autre équipement de l'utilisateur.

Fig 1

Fig 2

200

Commande voiture

202

NUAGE crée une session entre voiture et utilisateur

Récepteur facultatif clé sécurité

212

204

Clé sécurité

208

Localisation GPS dans des limites données, ou s'il est supposé proche si le GPS est imprécis ou non disponible

Clé sécurité

206

Télémétrie sécurisée avec la clé échangée précédemment

1000, 100.1

2000, 100.2

210

Fig 3

| Canal 9: (7.737-8.236GHz) | | | | BU-Canal 5: (6.240-6.739GHz) | | | | | 300 |
|---|---|---|---|---|---|---|---|---|---|
| UWB | Données | SYNC | SFD | PHR | PHY Charge utile | SPO | | | |
| | Position | | | | | SP3 | SYNC | SFD | STS |

| UNII1: (5.725-5.85GHz (125MHz)) | | | | BU-UNII1: (5.150-5.250GHz (100MHz)) | 302 |
|---|---|---|---|---|---|
| NB | Données | SYNC | SFD | PHR | PHY Charge utile |

| Canal 9: (7.737-8.236GHz) | BU-Canal 5: (6.240-6.739GHz) | 304 |
|---|---|---|
| UWB | Position | MMS-STS |

Fig 4

Téléphone | RIM | | Rapport |
Voiture | | Rsp | | Canal bande étroite

Téléphone | RSF1 RSF2 RSF3 RSF4 RSF5 RSF6 RSF7 RSF8
Voiture | RSF1 RSF2 RSF3 RSF4 RSF5 RSF6 RSF7 RSF8 | Canal UWB

1ms

Télémétrie MMS

Fig 5

3000

102                  102

100                  100

1000                  2000

Fig 6

400

Client inscrit à service
(par exemple taxi ou
covoiturage)

402

Commande
Utilisateur
commande un
véhicule

404

Localisation GPS dans
des limites données, ou
s'il est supposé proche si
le GPS est imprécis ou
non disponible

406

Télémétrie sécurisée
avec la clé échangée
précédemment

Fig 7

2000    1000

RMARKER Tx
Tprop
Tround1
Tprop
Rx
Trep2
Tx

Rx
Trep1
Tx
Tround2
Rx
Tprop

Obtention Tround1 &
Trep1 via message
RMI

Obtention Tround2 &
Trep2 via message
RMI

temps

Fig 8

Fig 9

**RAPPORT DE RECHERCHE EUROPEENNE**

Numéro de la demande

EP 25 20 0744

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2023/044015 A1 (REZAEI SHAHRAM [US] ET AL) 9 février 2023 (2023-02-09) <br> * figures 1, 2, 3B, 3C * <br> * alinéa [0001] - alinéa [0024] * <br> * alinéa [0040] - alinéa [0054] * <br> * alinéa [0069] * <br> ----- | 1-15 | INV. <br> G01S5/02 <br> G01S11/02 <br> G01S13/02 <br> G01S13/76 <br> G01S19/46 <br> H04W4/40 |
| A | WO 2021/151527 A1 (BAYERISCHE MOTOREN WERKE AG [DE]) 5 août 2021 (2021-08-05) <br> * page 14, ligne 30 - page 15, ligne 15 * <br> ----- | 5,7 | ADD. <br> H04W4/80 <br> H04W12/00 <br> G01S3/46 |
| A | US 2022/055654 A1 (LUAN ROBERT IRVING [US] ET AL) 24 février 2022 (2022-02-24) <br> * figure 18 * <br> * alinéa [0033] - alinéa [0035] * <br> ----- | 4,10, 13-15 | |
| A | US 10 759 389 B2 (APPLE INC [US]) 1 septembre 2020 (2020-09-01) <br> * figures 5, 7, 9 * <br> ----- | 13-15 | |

**DOMAINES TECHNIQUES RECHERCHES (IPC)**

G01S
H04W
H04L

Le présent rapport a été établi pour toutes les revendications

| Lieu de la recherche | Date d'achèvement de la recherche | Examinateur |
|---|---|---|
| Munich | 29 janvier 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

EP 4 711 797 A1

## ANNEXE AU RAPPORT DE RECHERCHE EUROPEENNE
## RELATIF A LA DEMANDE DE BREVET EUROPEEN NO.

EP 25 20 0744

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2026

| Document brevet cité au rapport de recherche | Date de publication | Membre(s) de la famille de brevet(s) | | Date de publication |
|---|---|---|---|---|
| US 2023044015 A1 | 09-02-2023 | AUCUN | | |
| WO 2021151527 A1 | 05-08-2021 | CN | 114729984 A | 08-07-2022 |
| | | EP | 3859372 A1 | 04-08-2021 |
| | | US | 2022412754 A1 | 29-12-2022 |
| | | WO | 2021151527 A1 | 05-08-2021 |
| US 2022055654 A1 | 24-02-2022 | AUCUN | | |
| US 10759389 B2 | 01-09-2020 | CN | 111066335 A | 24-04-2020 |
| | | CN | 117560671 A | 13-02-2024 |
| | | EP | 3656147 A1 | 27-05-2020 |
| | | EP | 3886474 A1 | 29-09-2021 |
| | | EP | 4429284 A2 | 11-09-2024 |
| | | JP | 6951553 B2 | 20-10-2021 |
| | | JP | 7052123 B2 | 11-04-2022 |
| | | JP | 7407855 B2 | 04-01-2024 |
| | | JP | 7696409 B2 | 20-06-2025 |
| | | JP | 2020532207 A | 05-11-2020 |
| | | JP | 2021170777 A | 28-10-2021 |
| | | JP | 2022104962 A | 12-07-2022 |
| | | JP | 2024026068 A | 28-02-2024 |
| | | JP | 2025157215 A | 15-10-2025 |
| | | KR | 20200031160 A | 23-03-2020 |
| | | KR | 20210111877 A | 13-09-2021 |
| | | KR | 20220016281 A | 08-02-2022 |
| | | KR | 20220130256 A | 26-09-2022 |
| | | US | 2019135229 A1 | 09-05-2019 |
| | | US | 2020062217 A1 | 27-02-2020 |
| | | WO | 2019067105 A1 | 04-04-2019 |

EPO FORM P0460

Pour tout renseignement concernant cette annexe : voir Journal Officiel de l'Office européen des brevets, No.12/82